# FASCICULE DE BREVET EUROPEEN

(11) **EP 2 440 394 B1**
(45) Date de publication et mention de la délivrance du brevet: **25.04.2018**
(21) Numéro de dépôt: 10726035.8
(22) Date de dépôt: 04.06.2010
(51) Int. Cl.: B29C 70/24, B29C 70/56, B60B 5/02

(54) **PROCEDE DE FABRICATION D'UNE ARMATURE DE JANTE EN MATERIAU COMPOSITE**
VERFAHREN ZUR HERSTELLUNG EINER RANDARMATUR MIT EINEM KOMPOSITMATERIAL
METHOD FOR MANUFACTURING A RIM ARMATURE USING A COMPOSITE MATERIAL

(30) Priorité: 10.06.2009 FR 0902804
(43) Date de publication de la demande: 18.04.2012
(73) Titulaire: HEROÏN, 92100 Boulogne Billancourt (FR)
(72) Inventeur: PHILIPPOT, Olivier, 13006 Marseille (FR); CHENU, Rémi, 03110 Brout Vernet (FR)
(74) Mandataire: Beaudouin-Lafon, Emmanuel
(86) Numéro de dépôt international: PCT/EP2010/057834
(87) Numéro de publication internationale: WO 2010/142609

(56) Documents cités:
- US-A- 3 917 352
- US-A1- 2007 187 867

## Description

L'invention concerne la fabrication d'une jante dans un matériau composite comportant des fils d'armature noyés dans une matrice.

### ARRIERE PLAN DE L'INVENTION

Les jantes en matériau composite sont utilisées en particulier sur les vélos où elles apportent un gain de poids significatif, tout en offrant une résistance mécanique suffisante vis-à-vis des efforts auxquels est soumise la roue.

Le document US3917352 divulgue une jante en matériau composite où des filaments sont bobinés autour d'un moule en deux pièces.

Le document US20070187867 divulgue une jante de bicyclette en matériau composite comprenant deux flancs périphériques pour monter un pneu. Cependant, la forme généralement torique à section transversale incurvée des jantes rend leur fabrication très complexes avec des matériaux composites, car la paroi principale d'une jante a une forme torique qui ne correspond pas à une surface développable, c'est-à-dire qu'il ne s'agit pas d'une surface réglée.

Dans les solutions connues, des bandes de tissu sont appliquées sur un moule torique, en tentant de minimiser les plis que subit ce tissu pour épouser la forme qui lui est imposée. Ce tissu est ensuite imprégné de résine pour noyer les fils qui le composent afin de former après polymérisation de la résine un tout rigide et présentant la résistance mécanique requise. Le tissu peut également être du type pré-imprégné de résine préalablement à son application sur le moule torique.

Ces solutions présentent l'inconvénient de nécessiter une quantité importante de tissu qui pénalise finalement le poids de la jante, tout en nécessitant impérativement que le procédé soit mis en oeuvre manuellement par un opérateur hautement qualifié.

### OBJET DE L'INVENTION

Le but de l'invention est de proposer une solution pour remédier aux inconvénients ci-dessus.

### RESUME DE L'INVENTION

A cet effet, l'invention a pour objet un procédé de fabrication d'une structure de jante en matériau composite comprenant des fils noyés dans une matrice selon la revendication 1. Avec cette solution, les fils formant la structure de jante peuvent s'étendre dans des plans inclinés par exemple à quarante-cinq degrés par rapport à l'axe de la jante, tout en étant précontraints grâce aux moyens de rappel sur lesquels ils sont enroulés. Il en résulte une structure de jante qui présente à la fois une résistance mécanique élevée et un faible poids. Selon un mode de réalisation préférentiel, le procédé comporte, après engagement de l'âme, une opération d'enroulement d'autres fils en zigzag sur d'autres organes de renvoi selon un autre motif en zigzag chevauchant la gorge, et une opération d'enroulement d'autres fils circulairement sur le motif en zigzag de façon à ramener une région centrale de cet autre motif en zigzag sur une face externe de l'âme pour former une paroi de fond de jante, préalablement à l'injection du matériau formant matrice.

Avec cette solution, la jante peut présenter une section trapézoïdale en caisson améliorant sa résistance mécanique. Selon un mode de réalisation préférentiel, le procédé comporte, après enroulement des autres fils, une opération de montage dans la gorge d'un ensemble d'inserts internes en appui sur le fond de jante, une opération de rabattage des fils en zigzag contre des faces latérales de cet ensemble d'inserts internes, et une opération de montage d'inserts externes maintenant en appui les fils en zigzag sur les faces latérales de l'ensemble d'inserts internes, avant injection du matériau formant matrice.

De cette manière, la jante peut avoir une section dite de jante à crosses, autorisant le montage d'un pneu traditionnel, c'est-à-dire comportant des fils d'armature circonférentiels à chacun de ses bords.

L'invention concerne également un moule pour la mise en oeuvre du procédé tel que défini ci-dessus, conformément à la revendication 4.

### BREVE DESCRIPTION DES FIGURES

La figure 1 est une vue montrant en perspective une portion du moule et les premiers fils en zigzag chevauchant la gorge de ce moule ;
La figure 2 est une vue montrant en perspective la moitié du moule et les premiers fils en zigzag chevauchant sa gorge ;
La figure 3 est une vue montrant en perspective une portion du moule et les premiers fils circulaires ramenant la région centrale des premiers fils en zigzag en fond de gorge pour former la paroi centrale de la jante ;
La figure 4 est une vue montrant en perspective la moitié du moule et les premiers fils circulaires ramenant la région centrale des premiers fils en zigzag en fond de gorge pour former la paroi centrale de la jante ;
La figure 5 est une vue montrant en coupe le moule et les premiers fils en zigzag ;
La figure 6 est une vue montrant en coupe le moule avec les premiers fils en zigzag et les premiers fils circulaires ;
La figure 7 est une vue montrant en coupe le moule avec les premiers fils en zigzag et les premiers fils circulaires ainsi que le noyau de la jante engagé dans la gorge ;
La figure 8 est une vue montrant en coupe le moule avec les premiers fils circulaires et en zigzag ainsi que le noyau et les seconds fils en zigzag ;
La figure 9 est une vue montrant en coupe le moule avec les premiers et seconds fils en zigzag ainsi que le noyau et les premiers et seconds fils circulaires ;
La figure 10 est une vue montrant en coupe le moule avec les premiers et seconds fils circulaires et en zigzag ainsi que le noyau et les inserts internes ;
La figure 11 est une vue montrant en coupe le moule avec les premiers et seconds fils circulaires et en zigzag ainsi que le noyau et les inserts internes et externes.

### DESCRIPTION DETAILLEE DE L'INVENTION

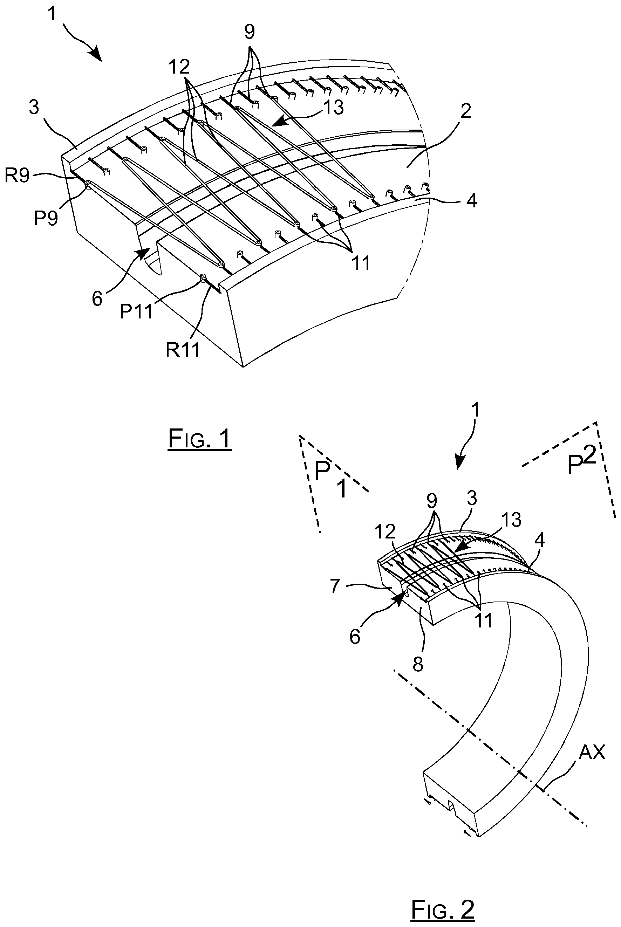

Le moule utilisé pour le procédé selon l'invention, qui apparaît en figure 1 et 2 en y étant repéré par 1 comprend un corps de moule ayant une forme de révolution autour d'un axe AX, comportant une face externe 2 généralement cylindrique délimitée par deux bords 3 et 4 dépassant radialement de cette face externe 2. Cette face externe 2 comporte dans sa région centrale une gorge circulaire 6 de section généralement trapézoïdale.

Ce moule 1 est en fait formé de deux parties, une moitié de chacune de ces parties étant visibles dans la figure 2 en y étant repérées par 7 et 8, cette figure 2 montrant toute une moitié du moule fictivement coupé selon un plan P1 passant par son axe de révolution AX. Les deux parties formant le moule sont situées de part et d'autre d'un plan P2 normal à son axe de révolution AX, ce second plan P2 étant dans l'exemple des figures un plan de symétrie du moule 1 qui partage sa gorge 6 en deux parties symétriques.

Ces deux parties du moule (1) s'emboîtent l'une dans l'autre de manière à constituer un corps de moule de révolution, d'un seul tenant, moyennant éventuellement des organes d'accrochage non représentés solidarisant les deux parties l'une à l'autre. L'emboîtement est prévu pour permettre de séparer les deux parties 7 et 8 en les éloignant l'une de l'autre selon l'axe AX.

Le moule 1 est équipé de premiers organes de renvoi de fil, ces organes qui sont repérés par 9 et 11 étant situés sur sa face cylindrique 2 en étant agencés par paires de deux organes situés respectivement de part et d'autre de la gorge 6 et en vis-à-vis l'un de l'autre. Ils constituent une série 9 d'organes de renvoi régulièrement répartis le long d'un bord de la gorge 6, et une autre série 11 d'organes de renvoi qui sont régulièrement répartis le long de l'autre bord de la gorge 6.

Comme visible dans les figures 1 et 2, chaque organe de renvoi 9 comporte un pion P9 associé à un ressort R9. Chaque pion P9 est orienté selon une direction normale à la face cylindrique 2 tout en étant mobile le long de cette face 2 et selon une direction perpendiculaire à la gorge 6. Chaque ressort hélicoïdal R9 a une extrémité solidarisée au pion P9 et son autre extrémité solidarisée au bord 3 du corps de moule.

Chaque pion P9 peut être monté coulissant dans une rainure rectiligne non représentée, et orienté perpendiculairement à la gorge 6, tout comme le ressort R9 tendant à maintenir ce pion éloigné de la gorge 6.

De façon analogue, chaque organe de renvoi 11 comporte un pion P11 associé à un ressort R11 reliant ce pion P11 au bord 4 pour tendre continûment à éloigner ce pion P11 de la gorge centrale 6.

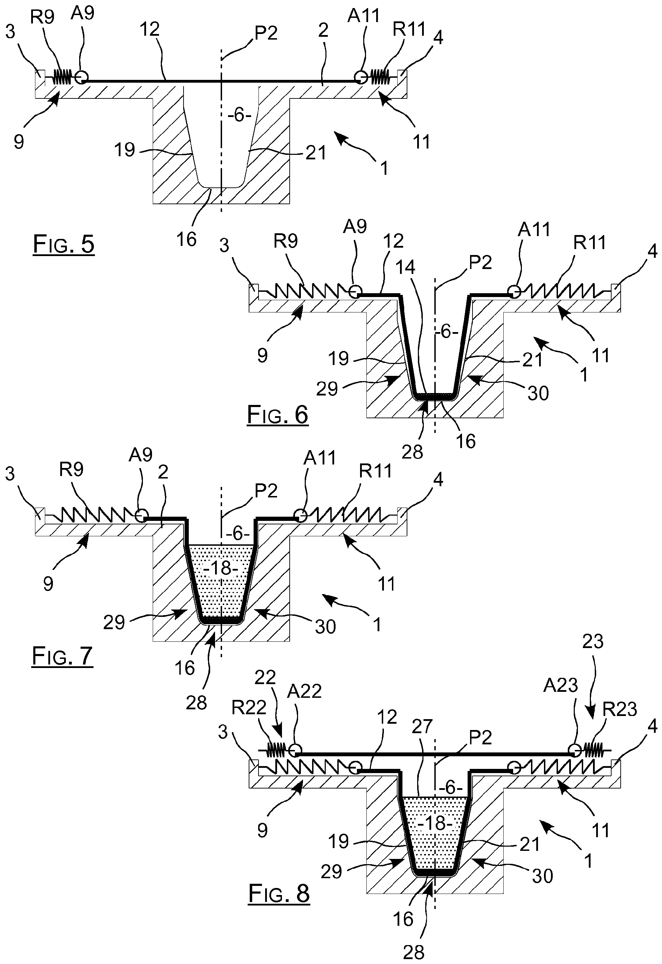

En variante, chaque organe de renvoi 9, 11 peut être formé simplement par un ressort hélicoïdal R9, R11 ayant une extrémité fixée à un bord 3, 4 du corps de moule 1, et son autre extrémité pourvue d'une boucle ou d'un anneau A9, A11, ce qui est illustré sur les figures 6 à 11.

Dans un cas comme dans l'autre, les organes de renvoi 9 et 11 servent à renvoyer un ou des fils d'armature du matériau composite formant la jante à fabriquer, ces fils pouvant selon le cas entourer les pions P9, P11, ou bien être engagés dans anneaux A9, A11.

On entend par fil un ensemble de fils de carbone formant une mèche ou un ruban, chaque mèche comportant par exemple un millier de fils de carbone de dix microns de diamètre chacun, cette mèche ayant un diamètre de l'ordre de un millimètre.

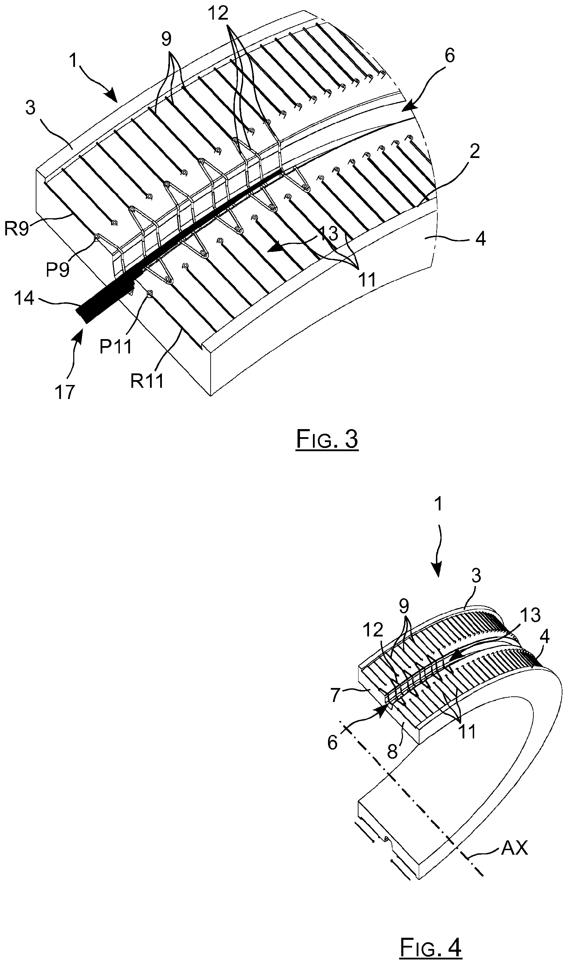

Comme représenté aux figures 1 à 3 un ou des premiers fils en zigzag repérés par 12 sont d'abord enroulés alternativement sur un organe de renvoi 9 puis sur un organe de renvoi 11 situé de l'autre côté de la gorge 6, de manière à constituer un motif 13 généralement en zigzag, qui chevauche la gorge 6.

Le motif en zigzag peut être constitué d'un fil unique enroulé à chaque organe de renvoi, ou bien de plusieurs fils distincts qui sont alors enroulés chacun à plusieurs organes de renvoi.

Une fois que ce ou ces premiers fils en zigzag 12 ont été bobinés tout autour du moule 1 ils chevauchent la gorge 6 sur la totalité de sa circonférence. Des premiers fils circulaires 14 sont bobinés alors circulairement autour du moule 1 de façon à recouvrir une partie centrale du motif en zigzag 13, située en vis-à-vis de la gorge 6, sur toute la circonférence du moule 1. L'enroulement de ces premiers fils circulaires 14, enserre toute la région centrale du motif en zigzag 13, en la rapprochant du fond 16 de la gorge 6, jusqu'à ce que l'ensemble vienne en appui sur ce fond de gorge 16.

Une fois que les premiers fils circulaires 14 ont été complètement enroulés, ils constituent conjointement une bande 17 qui est en appui sur le fond de gorge 16 par l'intermédiaire des portions de fils de la région centrale du motif en zigzag 13.

Comme illustré sur les figures, 3, 4 et 6, la descente contre le fond de gorge 16 de la région centrale du motif de fils en zigzag 13, sous l'effet de l'enroulement des premiers fils circulaires 14, est rendue possible par le fait que les organes de renvoi 9, 11 sont maintenus par les moyens élastiques de rappel que constituent les ressorts R9 et R11.

Durant cette opération, la partie centrale du motif en zigzag 13 descend dans la gorge 6, en tirant sur les plots P9 et P11 ou sur les anneaux A9 et A11, à l'encontre des ressorts R9 et R11. En conséquence, une fois que les premiers fils circulaires 14 ont été bobinés, les plots P9 et P11 ou les anneaux A9 et A11 se sont rapproché des berges de la gorge 9 comme le montrent clairement les vues en coupe des figures 6 et suivantes.

Les ressorts R9 et R11 permettent d'une part la descente de la partie centrale du motif 13 contre le fond de la gorge 6, tout en maintenant les premiers fils en zigzag 12 sous une tension mécanique.

Lorsque l'enroulement des premiers fils circulaires 14 est terminé, un noyau 18 est engagé dans la gorge 6, par dessus les différents fils 12 et 14, ce qui permet de plaquer ces fils contre les parois latérales 19 et 21 de la gorge 6, comme le montre la figure 7.

Ce noyau 18 est un corps torique présentant une section trapézoïdale similaire à la section de la gorge, mais de plus faible hauteur, et de plus faible largeur. Il peut être fabriqué à partir de mousse, ou bien se présenter sous forme d'une enveloppe torique gonflable remplie d'air.

Quoi qu'il en soit, et comme visible dans les figures, ce noyau 18 s'engage dans la gorge pour s'y emboîter de manière à combler cette gorge sur une partie de sa hauteur.

Cette opération étant effectuée, des seconds fils sont bobinés en zigzag sur des seconds organes de renvoi repérés par 22 et 23, du même type que les premiers organes de renvoi 9 et 11 et disposés de façon analogue. Chaque organe de renvoi 22 comporte ainsi un anneau A22 dans lequel est engagé le fil en zigzag, et cet anneau A22 est associé à un ressort de rappel R22 ayant une extrémité solidarisée à cet anneau et une autre extrémité solidarisée au bord 3.

De façon analogue, les organes de renvoi 23 qui sont situés en vis-à-vis des organes de renvoi 22 comportent chacun un anneau A23 et un ressort de rappel R23 rappelant cet anneau A23 vers le bord 4 auquel l'une de ses extrémités est fixée.

Les seconds organes de renvoi 22 sont ainsi agencés en une série, régulièrement répartis le long d'un bord de la gorge 6, et les autres organes de renvoi 23 sont agencés en une autre série en étant régulièrement répartis le long de l'autre bord de la gorge 6.

Les seconds organes de renvoi 22 et 23 peuvent être situés au dessus des premiers organes de renvoi 9 et 11, comme représenté dans les figures 5 à 11. Mais il est également possible d'intercaler un second organe de renvoi 22 entre les premiers organes de renvoi 9 consécutifs de chaque série de premiers organes de renvoi.

Ces seconds fils en zigzag 24 sont, comme les premiers fils en zigzag 12, bobinés sur les organes de renvoi 22 et 23 en étant passés dans leurs anneaux A22 et A23, pour former un motif en zigzag chevauchant la gorge 6 sur toute la circonférence du moule 1.

Le motif en zigzag peut là aussi être constitué d'un fil unique enroulé à chaque organe de renvoi, ou bien de plusieurs fils distincts qui sont alors enroulés chacun à plusieurs organes de renvoi.

Une fois que ces seconds fils en zigzags ont été bobinés, ce qui correspond à la figure 8, des seconds fils circulaires 26 sont enroulés autour du moule, sur une région centrale du motif formé par les seconds fils en zigzag 24, c'est-à-dire au dessus de la gorge 6.

L'enroulement de ces seconds fils circulaires 26 a pour effet de ramener les seconds fils en zigzag 24 contre la face externe cylindrique 27 du noyau 18, à l'encontre des ressorts R22 et R23, rapprochant par là même les anneaux A22 et A23 de la gorge centrale 6.

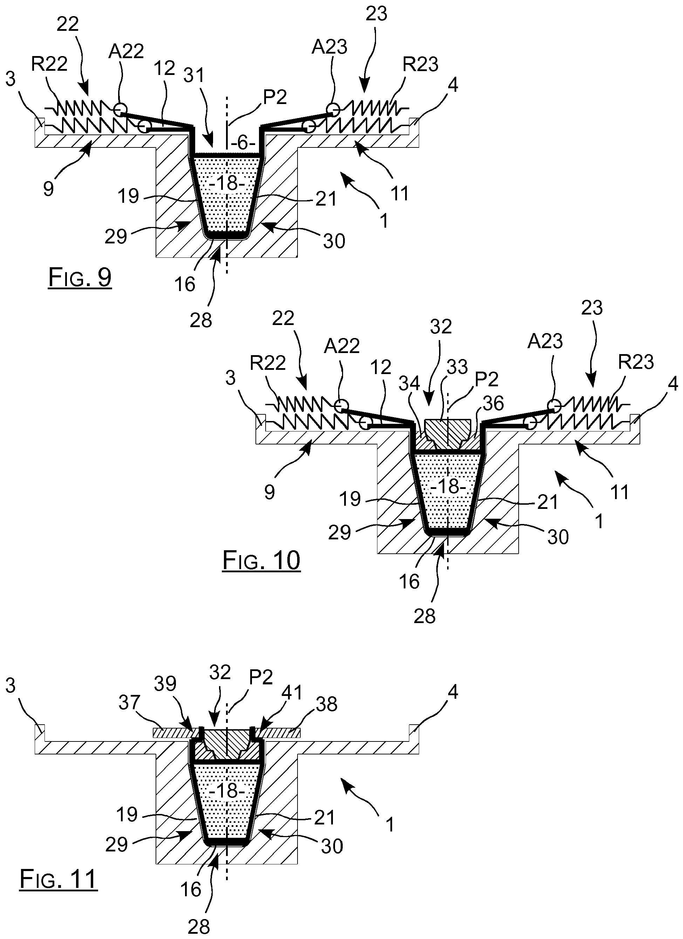

Dans cette situation qui correspond à la figure 9, les seconds fils en zigzag sont maintenus sous tension par les ressorts R22 et R23.

A ce stade, les premiers et seconds fils en zigzag et ainsi que les premiers et seconds fils circulaires sont tous maintenus sous tension tout en étant agencés de façon à donner à la jante une section de forme trapézoïdale renfermant le noyau 18, pour qu'elle forme un caisson torique.

Cette section qui confère à la jante un moment quadratique élevé, c'est-à-dire une résistance mécanique accrue, est délimitée par une paroi centrale cylindrique 28 raccordée à deux flancs tronconiques 29 et 30 et un fond de jante 31 reliant également ces deux flancs 29 et 30 l'un à l'autre.

Comme visible sur les figures, les deux flancs tronconiques 29 et 31 dépassent radialement du fond de jante 31 pour assurer le calage du pneu ou du boyau à monter sur cette jante.

La paroi centrale 28 de la jante correspond au fond 16 de la gorge 6, les flancs 29 et 30 de la jante correspondent aux parois latérales 19 et 21 de la gorge 6, et le fond de jante 31 est constitué par les seconds fils en zigzag et les second fils circulaires qui sont bobinés sur une face externe du noyau 18.

Un ensemble d'inserts internes 32 présentant une section en T, est ensuite engagé contre le fond de jante 31, comme illustré sur la figure 10. Cet ensemble d'inserts internes 32 est ici formé en section d'un insert central 33 correspondant à la barre verticale de la lettre T, et deux inserts latéraux 34 et 36 correspondant aux extrémités de la barre transversale de cette lettre T.

Cet ensemble d'inserts internes 32 peut correspondre à l'agencement d'une quantité de pièces relativement importante emboîtées les unes après les autres contre le fond 31 de la jante sur toute la circonférence de la gorge 6. Comme visible sur les figures, l'ensemble d'inserts internes 32 a, au niveau de la barre transversale de la lettre T qu'ils forment, une largeur correspondant à la distance séparant les faces internes des parties des flancs 29 et 31 dépassant radialement du fond 31.

L'ensemble constitué par les premiers et les seconds fils en zigzag 12 et 24 sont alors coupés au niveau des organes de renvoi, puis rabattus contre les faces latérales de l'ensemble d'inserts internes 32. Des inserts externes additionnels 37, 38 sont ensuite rapportés pour maintenir en appui cet ensemble de fils contre les faces latérales de l'ensemble d'inserts internes 32, ce qui permet de donner aux extrémités des flancs 29 et 31 dépassant radialement, leurs formes de crosses, repérées par 39 et 41.

Dans cette situation, les premiers et seconds fils en zigzag aussi bien que les premiers et seconds fils circulaires restent soumis à une tension mécanique relativement importante puisqu'ils sont tous bloqués entre d'une part la gorge 6 et d'autre part le noyau 18 et l'ensemble d'inserts 32, 37 et 38.

Le matériau formant matrice, c'est-à-dire la résine peut alors être injectée sous pression entre d'une part la gorge 6, et d'autre part le noyau 18 ainsi que l'ensemble d'inserts 32, 37 et 38 de manière à noyer les fils pour constituer un tout rigidement solidaire et précontraint.

Comme on le voit, l'invention permet de fabriquer une jante en matériau composite dont les fils sont précontraints, ce qui lui confère une résistance mécanique accrue pour un poids réduit.

Cette solution permet de fabriquer des jantes ayant en section une forme relativement complexe, comme les jantes dites à crosses correspondant à la jante de la figure 11.

Compte tenu du fait que cette solution utilise des fils ou mèches pouvant avoir un diamètre de l'ordre du millimètre, elle permet le cas échéant de fabriquer une structure de jante dont la ou les parois principales sont ajourées, c'est-à-dire dans laquelle la matrice entoure les fils sans nécessairement assurer une jonction continue entre deux fils contigus.

Dans l'exemple des figures, chaque organe de renvoi comporte un ressort qui lui est propre. Mais il est également possible de monter une partie ou la totalité de chaque série d'organes de renvoi sur un tiroir commun qui est lui-même assujetti à un ou plusieurs moyens de rappel.

Par ailleurs, les moyens de rappel qui sont des ressorts dans l'exemple des figures peuvent aussi se présenter sous forme de moyens mobiles asservis en position et/ou en tension mécanique.

Compte tenu de la densité de fils nécessaire pour atteindre la résistance mécanique requise, le nombre d'organes de renvoi disposés sur l'ensemble du moule peut être compris entre deux cents et cinq cents, le bobinage des fils étant alors avantageusement assuré de façon automatisée par un robot.

## Revendications

1. Procédé de fabrication d'une structure de jante en matériau composite comprenant des fils (12, 14, 24, 26) noyés dans une matrice, ce procédé comprenant les opérations de :
- prévoir un moule (1) ayant une forme de révolution comportant une gorge circulaire externe (6) et des organes de renvoi (9, 11, 22, 23) de fil uniformément répartis le long de chaque côté de cette gorge (6), chaque organe de renvoi (9, 11, 22, 23) étant mobile perpendiculairement à la gorge (6), ainsi que des moyens de rappel (R9, R11) rappelant chacun un organe de renvoi (9, 11, 22, 23) de manière à l'éloigner de la gorge (6) ;
- enrouler des fils en zigzag (12) sur les organes de renvoi (9, 11, 22, 23) selon un motif chevauchant la gorge (6) ;
- enrouler des fils (14) circulairement sur le motif formé (13) par les fils en zigzag (12), de façon à ramener une région centrale du motif en zigzag (13) au fond (16) de la gorge (6) pour former une paroi centrale (28) de la jante correspondant au fond de gorge (16);
- engager dans la gorge (6) un noyau (18) comblant au moins partiellement cette gorge (6) ;
- injecter un matériau formant matrice entre la gorge (6) et le noyau (18) pour noyer les fils (12, 14, 24, 26) dans ce matériau.

2. Procédé selon la revendication 1, comportant, après engagement du noyau (18), une opération d'enroulement d'autres fils en zigzag (24) sur d'autres organes (22, 23) de renvoi selon un autre motif en zigzag chevauchant la gorge (6), et une opération d'enroulement d'autres fils (26) circulairement sur le motif en zigzag de façon à ramener une région centrale de cet autre motif en zigzag (24) sur une face externe (27) du noyau (18) pour former une paroi de fond de jante (31), préalablement à l'injection du matériau formant matrice.

3. Procédé selon la revendication 2, comportant, après enroulement des autres fils (24, 26), une opération de montage dans la gorge (6) d'un ensemble d'inserts internes (32) en appui sur le fond de jante (31), une opération de rabattage des fils en zigzag (12, 24) contre des faces latérales de cet ensemble d'inserts internes (32), et une opération de montage d'inserts externes (37, 38) maintenant en appui les fils en zigzag (12, 24) sur les faces latérales de l'ensemble d'inserts internes (32), avant injection du matériau formant matrice.

4. Moule (1) pour la mise en oeuvre du procédé selon l'une des revendications précédentes, comportant un corps ayant une forme de révolution comprenant au moins deux parties (7, 8) séparables au niveau d'un plan (P2) normal à son axe de révolution (AX), **caractérisé en ce que** ledit moule (1) comporte
- une gorge circulaire externe (6) ;
- des organes de renvoi (9, 11, 22, 23) de fil uniformément répartis le long de chaque côté de ladite gorge (6), chaque organe de renvoi (9, 11, 22, 23) étant mobile perpendiculairement à la gorge (6), ainsi que des moyens de rappel (R9, R11) rappelant chacun un organe de renvoi (9, 11, 22, 23) de manière à l'éloigner de la gorge (6).

## Patentansprüche

1. Verfahren zur Herstellung einer Felgenstruktur aus einem Verbundwerkstoff, der in eine Matrix eingebettete Fasern (12, 14, 24, 26) umfasst, wobei dieses Verfahren die Vorgänge umfasst:
- Vorsehen einer Form (1), die eine Rotationsform hat und die eine äußere kreisförmige Nut (6) und Faserumlenkorgane (9, 11, 22, 23) umfasst, die gleichmäßig entlang jeder Seite dieser Nut (6) verteilt sind, wobei jedes Umlenkorgan (9, 11, 22, 23) senkrecht zu dieser Nut (6) beweglich ist, sowie Rückstellmittel (R9, R11), die jeweils ein Umlenkorgan (9, 11, 22, 23) so rückstellen, dass es sich von der Nut (6) entfernt;
- Wickeln von Fasern (12) im Zickzack auf die Umlenkorgane (9, 11, 22, 23) gemäß einem Muster, das die Nut (6) überspannt;
- kreisförmiges Wickeln von Fasern (14) auf das Muster (13), das von den Zickzack-Fasern (12) gebildet wird, so dass ein zentraler Bereich des Zickzack-Musters (13) zum Boden (16) der Nut (6) gezogen wird, um eine zentrale Wand (28) der Felge zu bilden, die dem Boden der Nut (16) entspricht;
- Einfügen in die Nut (6) eines Kerns (18), der diese Nut (6) zumindest teilweise auffüllt;
- Einspritzen eines eine Matrix bildenden Materials zwischen der Nut (6) und dem Kern (18), um die Fasern (12, 14, 24, 26) in dieses Material einzubetten.

2. Verfahren nach Anspruch 1, umfassend, nach dem Einfügen des Kerns (18), einen Vorgang des Wickelns weiterer Fasern (24) im Zickzack auf weitere Umlenkorgane (22, 23) gemäß einem weiteren Zickzack-Muster, das die Nut (6) überspannt, und einen Vorgang des kreisförmigen Wickelns weiterer Fasern (26) auf das Zickzack-Muster, derart, dass ein zentraler Bereich von diesem weiteren Zickzack-Muster (24) auf eine Außenseite (27) des Kerns (18) gezogen wird, um eine Bodenwand der Felge (31) zu bilden, vor dem Einspritzen des die Matrix bildenden Materials.

3. Verfahren nach Anspruch 2, umfassend, nach dem Wickeln weiterer Fasern (24, 26), einen Vorgang des Anbringens in der Nut (6) einer Gruppe von inneren Einlegeteilen (32) in Anlage auf dem Felgenboden (31), einen Vorgang des Umlegens der Zickzack-Fasern (12, 24) gegen die Seitenflächen dieser Gruppe von inneren Einlegeteilen (32), und einen Vorgang der Montage von äußeren Einlegeteilen (37, 38), die die Zickzack-Fasern (12, 24) in Anlage an den Seitenflächen der Gruppe von inneren Einlegeteilen (32) halten, vor dem Einspritzen des die Matrix bildenden Materials.

4. Form (1) zum Durchführen des Verfahrens nach einem der vorhergehenden Ansprüche, umfassend ein Gehäuse, das eine Rotationsform hat und das mindestens zwei Teile (7, 8) umfasst, die im Bereich einer Ebene (P2), die senkrecht zu seiner Rotationsachse (AX) ist, trennbar sind, **dadurch gekennzeichnet, dass** die Form (1) umfasst:
- eine äußere kreisförmige Nut (6);
- Faserumlenkorgane (9, 11, 22, 23), die gleichmäßig entlang jeder Seite der Nut (6) verteilt sind, wobei jedes Umlenkorgan (9, 11, 22, 23) senkrecht zur Nut (6) beweglich ist, sowie Rückstellmittel (R9, R11), die jeweils ein Umlenkorgan (9, 11, 22, 23) derart rückstellen, dass es sich von der Nut (6) entfernt.

## Claims

1. A method of fabricating a rim structure out of composite material comprising yarns (12, 14, 24, 26) embedded in a matrix, the method comprising the operations of:
• providing a mold (1) having the shape of a body of revolution with an outer circular groove (6) and yarn deflector members (9, 11, 22, 23) uniformly distributed along each side of the groove (6), each deflector member (9, 11, 22, 23) being movable perpendicularly to the groove (6), and return means (R9, Rll) that each moves one deflector member (9, 11, 22, 23) away from the groove (6);
• winding zigzag yarns (12) on the deflector members (9, 11, 22, 23) in a pattern that crosses the groove (6);
• winding yarns (14) circularly over the pattern (13) formed by the zigzag yarns (12) so as to bring the central region of the zigzag pattern (13) to the bottom (16) of the groove (6) to form a central wall (28) of the rim corresponding to the bottom of the groove (16);
• engaging a core (18) in the groove (6), thereby filing said groove (6) at least in part; and
• injecting a matrix-forming material between the groove (6) and the core (18) in order to embed the yarns (12, 14, 24, 26) in said material.

2. A method according to claim 1, comprising, after engaging the core (18), an operation of winding other zigzag yarns (24) on other deflector members (22, 23) in another zigzag pattern crossing the groove (6), and an operation of winding other yarns (26) circularly on the zigzag pattern so as to bring a central region of said other zigzag pattern (24) onto an outer face (27) of the core (18) to form a rim bottom wall (31), prior to injecting the matrix-forming material.

3. A method according to claim 2, comprising, after winding the other yarns (24, 26), an operation of mounting a set (32) of internal inserts in the groove (6) bearing against the rim bottom wall (31), a step of pressing the zigzag yarns (12, 24) against side faces of said set (32) of internal inserts, and an operation of mounting external inserts (37, 38) holding the zigzag yarns (12, 24) pressed against the side faces of the set (32) of internal inserts, prior to injecting the matrix-forming material.

4. A mold (1) for implementing the method according to any preceding claim, the mold comprising a body of revolution having at least two portions (7, 8) that are separable at a plane (P2) normal to its axis of revolution (AX), **characterized in that** the mold comprises:
- an outer circular groove (6);
- yarn deflector members (9, 11, 22, 23) uniformly distributed along each side of the groove (6), each deflector member (9, 11, 22, 23) being movable perpendicularly to the groove (6), and return means (R9, Rll) that each moves one deflector member (9, 11, 22, 23)away from the groove (6).
